# EUROPÄISCHE PATENTANMELDUNG

(11) **EP 3 296 677 A1**
(43) Veröffentlichungstag der Anmeldung: **21.03.2018**
(21) Anmeldenummer: 17177139.7
(22) Anmeldetag: 21.06.2017
(51) Int. Cl.: F28D 20/00

(54) **VERFAHREN ZUM SPEICHERN VON WÄRME**

(30) Priorität: 21.06.2016 AT 505612016
(71) Anmelder: Mekal, Krzysztof, 5400 Hallein (AT); Bernroiter, Siegfried, 5400 Hallein (AT)
(72) Erfinder: Mekal, Krzysztof, 5400 Hallein (AT)
(74) Vertreter: Patronus IP Patent- und Rechtsanwälte

(57) **Zusammenfassung**

Die vorliegende Erfindung betrifft einen Wärmespeicher, insbesondere für Gebäudeanwendungen, aufweisend einen ersten Festkörper (1) und einen zweiten Festkörper (5), wobei der zweite Festkörper (5) innerhalb des ersten Festkörpers (1) angeordnet ist, und eine Wärmeisolationsschicht (4) zwischen dem ersten Festkörper (1) und dem zweiten Festkörper (5), wobei der erste Festkörper (1) und der zweite Festkörper (5) jeweils separat von Fließkanälen (3, 6) für ein Wärmeträgermedium durchzogen sind. Die Erfindung betrifft auch ein Wärmeträgernetz (18), aufweisend eine Vielzahl von Wärmeträgerkreisen einschließlich wenigstens eines Speicherkreises mit einem Wärmespeicherelement (1, 5, 11), insbesondere Festkörperspeicherelement, wenigstens eines Erzeugerkreises mit einer Wärmequelle (12, 13) und eines Verbraucherkreises mit einem Wärmeverbraucher (9, 15, 21), und eine Steuervorrichtung (14), welche ausgebildet ist, um die Wärmeträgerkreise wahlweise miteinander zu verbinden.

## Beschreibung

Die vorliegende Anmeldung betrifft ein Verfahren zum Speichern von Wärme, einen Wärmespeicher, ein Gebäude mit einem Wärmespeicher und ein Wärmeträgernetz.

Es sind Heizsysteme bekannt, die erneuerbare Energie in Kombination mit saisonalen Festkörper-Wärmespeichern nützen. Bei solchen Heizsystemen werden wegen der großen Energiemengen, die für die ganze Saison benötigt wird, oft mit zusätzlichen Heizsystemen ergänzt, um Kältespitzen im Winter abzufangen. Festkörper-Wärmespeicher werden wegen der benötigten, großen Materialmenge oft aus kostengünstigen Festmaterialien erstellt. Im Sinne der vorliegenden Anmeldungen kann auch ein Schuttmaterial als Festmaterial, ein damit verfülltes Volumen als Festkörper verstanden werden.

Saisonale Festkörper-Wärmespeicher besitzen im Allgemeinen einen relativ einfachen Aufbau, bei dem ein Festkörper in einer thermischen Hülle verpackt und damit wärmegedämmt wird. Ein Wärmeträgermedium wird beispielsweise über Fließkanäle durch das feste Material geleitet, um Wärmeenergie zu- und abführen zu können. Sofern die Wärmeenergie hauptsächlich zum Heizen verwendet wird und beispielsweise durch Flächenheizung im niedrigem Temperaturbereich abgegeben wird, kann eine Niedertemperaturquelle (30 Grad sind noch nützlich) verwendet werden. Wärmeenergie für Warmwasser benötigt im Allgemeinen höhere Temperaturen und kann beispielsweise in getrennten, wassergefüllten Speichern aufbewahrt werden. Abgesehen von Phasenwechselspeichern, die auch in höheren Temperaturen arbeiten, arbeiten Festkörperspeicher herkömmlicherweise mit niedrigeren Temperaturen, aber dafür mit großen Volumina. Aufgrund der hohen Wärmespeicherdichte des Wassers finden auch große Wärmespeicher in Form einen gedämmten Tanks Verwendung, die durch die vertikale Schichtung die verschiedenen benötigten Temperaturbereiche bzw. Temperaturzonen bilden können. Die Teilung der thermischen Bereiche wird bei flüssigen Speichern oft als Speicher im Speicher konzipiert. Alle flüssigen Wärmespeicher haben jedoch auch ihre Nachteile. Die großen Wasserbehälter müssen aus speziellen Materialien angefertigt werden, und es müssen viele Sicherheitsaspekte zusätzlich beachtet werden. Die flüssigen Speicher benötigen außerdem einen Zugangsraum für die Wartung - beispielsweise werden bei sogenannten Sonnenhäusern die einige Meter hohen Speicher in der Mitte des Gebäude angeordnet, um den Zugang zu gewährleisten und die Wärmeverluste für das Haus nutzen zu können. Diese direkten Strahlungswärmeverluste stellen jedoch im Sommer ein Problem dar. Ebenfalls bekannte Heißwasserbehälter, die unter dem Gebäude angeordnet sind, benötigen eigene, statisch selbsttragende und sichere Konstruktionen bzw. Räume, welche die Herstellungskosten beträchtlich erhöhen.

Dem Erfinder sind einzelne nicht-öffentliche Experimente mit Festkörperwärmespeichern für Heizungsenergie bekannt. Bei einem solchen Experiment war ein Speicherblock in die Erde eingelassen und mit Glasschaumschrott gedämmt worden. Dabei besteht jedoch die Gefahr, dass bei Hochwasser oder schwerem Regen und demzufolge ansteigendes Grundwasser den Speicherblock umspült und die gespeicherte Wärme abzieht.

Aus der DE 25 42 348 A1 geht ein Wärmespeicher hervor, der als Schüttgutspeicher ausgebildet ist. Das Schüttgut wird unter dem zu heizenden Gebäude angeordnet und ist durch eine Art Schlitzwand gegen Grundwasserströmung abgeschottet. An dieser Schlitz- oder Schottwand ist innenseitig eine feuchtigkeitsfeste Wärmedämmschicht angeordnet. Zusätzlich können waagrechte Wärmedämmschichten angebracht sein. Höher temperierte Speicherstufen können von niedriger temperierten Speicherstufen umschlossen werden. Die Umschließung kann entweder nur horizontal oder auch vertikal oder auch allseitig erfolgen.

In der AT 515 658 B1 ist ein Erdwärmespeicher beschrieben, bei welchem ein Glasschaum-Granulat als Dämmschicht verwendet wird.

Aufgabe der vorliegenden Erfindung ist es, ein Verfahren zum Speichern von Wärme, einen saisonalen Wärmespeicher, der einen möglichst einfachen Aufbau aufweist und kostengünstig hergestellt werden kann, ein Gebäude mit einem solchen Wärmespeicher und ein darauf abgestimmtes Wärmeträgernetz zu schaffen.

Die Aufgabe wird wenigstens in Teilaspekten durch die Merkmale der unabhängigen Ansprüche gelöst. Bevorzugte Ausführungsformen und vorteilhafte Weiterbildungen bilden Gegenstände der Unteransprüche.

Ein erster Gesichtspunkt der vorliegenden Erfindung betrifft ein Verfahren zum Speichern von Wärme mit einem Wärmespeicher, insbesondere für Gebäudeanwendungen, aufweisend einen ersten Festkörper und einen zweiten Festkörper, wobei der zweite Festkörper innerhalb des ersten Festkörpers angeordnet und von diesem umhüllt ist, und eine Wärmeisolationsschicht zwischen dem ersten Festkörper und dem zweiten Festkörper, wobei der erste Festkörper und der zweite Festkörper jeweils separat von Fließkanälen für ein Wärmeträgermedium durchzogen sind. Als Gebäudeanwendungen sind Anwendungen zur Versorgung eines Gebäudesmit Wärme zu verstehen. Durch die Verwendung von Festkörpern als Wärmespeicher können höhere Speichertemperaturen erzielt werden als beispielsweise in Wasserspeichern. Durch den zweiten Festkörper, der isoliert innerhalb des ersten Festkörpers angeordnet ist und somit vollständig vom ersten Festkörper umschlossen wird, kann eine Temperaturschichtung eingehalten werden, wodurch mehrere Temperaturniveaus bereitgestellt werden können. Wenn die Temperatur im inneren zweiten Festkörper höher als im äußeren zweiten Festkörper ist, können Wärmeverluste aufgrund der Temperaturschichtung und damit verbundenen kleinen Temperatursprünge gering gehalten werden.

Der zweite Festkörper wird während einer Aufheizperiode auf eine Temperatur von über 100 °C, insbesondere über 110°C und vorzugsweise über 120°C erhitzt.

In bevorzugten Ausführungsformen ist vorgesehen, dass der erste Festkörper von einer Wärmeisolationsschicht vorzugsweise allseitig umhüllt ist. Dadurch können Wärmeverluste an die Umgebung minimiert werden.

In bevorzugten Ausführungsformen ist vorgesehen, dass der Wärmespeicher in einer dichten Wanne, insbesondere Betonwanne oder aus Ziegelsteinen und/oder Porenbetonsteinen ausgebildeten Wanne, die im Erdreich eingelassen ist, angeordnet oder anordenbar ist. Mit einer solchen Anordnung kann ein Umspülen des Wärmespeichers durch Grund- oder Sickerwasser vermieden werden, was auch dadurch hervorgerufenen Wärmeverlusten vorbeugt.

In bevorzugten Ausführungsformen ist vorgesehen, dass der Wärmespeicher innerhalb eines Gebäudes, insbesondere innerhalb eines Kellers, angeordnet oder anordbar ist. Diese Anordnung nutzt vorhandenen Raum und kann auch Wärmeverluste beim Transport zu Verbrauchsstellen minimieren helfen.

In bevorzugten Ausführungsformen ist vorgesehen, dass der erste Festkörper und/oder der zweite Festkörper eine Schüttung aus stückigem Feststoff aufweist. Mit einer solchen Bauweise kann der Aufbau des Wärmespeichers innerhalb eines Gebäudes vereinfacht werden. Wenn der stückige Feststoff Bauschutt aufweist, kann auch anfallendes Abfallmaterial wiederverwendet werden. Der stückige Feststoff kann mittels eines Binders gebunden sein, wobei der Binder insbesondere Zement aufweist, wodurch die Stabilität des Wärmespeichers sichergestellt werden kann.

In bevorzugten Ausführungsformen ist vorgesehen, dass die Wärmeisolationsschicht wenigstens teilweise, insbesondere in einem druckbelasteten Bereich, Glasschaum aufweist. Mit der Wärmeisolationsschicht kann jede der vorstehend erwähnten Wärmeisolationsschichten gemeint sein. Durch den druckstabilen Baustoff Glasschaum kann der Festkörper stabil und dauerhaft aufliegen.

In bevorzugten Ausführungsformen ist vorgesehen, dass die Wärmeisolationsschicht wenigstens teilweise, insbesondere in einem mechanisch gering belasteten Bereich, Kunststoff, insbesondere einen Porenkunststoff, aufweist. Dieser Werkstoff ist besonders leicht und gut zu handhaben, was auch die Herstellung des Wärmespeichers vereinfachen und die statischen Belastungen des Gebäudes verringern kann.

Nach einem weiteren Aspekt der vorliegenden Erfindung wird ein Wärmespeicher vorgesehen, der einen ersten Festkörper und einen zweiten Festkörper aufweist, wobei der zweite Festkörper innerhalb des ersten Festkörpers angeordnet ist, und eine Wärmeisolationsschicht zwischen dem ersten Festkörper und dem zweiten Festkörper vorgesehen ist, wobei der erste Festkörper und der zweite Festkörper jeweils separat von Fließkanälen für eine Wärmeträgermedium durchzogen sind. Der erst Festkörper ist von einer Wärmeisolationsschicht umhüllt, welche zumindest bereichsweise aus Ziegelsteinen und/oder Porenbetonsteinen ausgebildet ist. Eine solche Wärmeisolationsschicht besitzt hervorragende thermische Isolationseigenschaften und zudem eine hohe Festigkeit. Dies gilt insbesondere, wenn die Wärmeisolationsschicht aus Ziegelsteinen ausgebildet ist.

Die Dicke einer solchen Wärmeisolationsschicht beträgt vorzugsweise zumindest 30 cm und besonders bevorzugt zumindest 50 cm.

Der erste Festkörper ist vorzugsweise allseitig von einer Wärmeisolationsschicht umgeben. Die Wärmeisolationsschicht kann bereichsweise aus unterschiedlichen Materialien ausgebildet sein. Seitliche Wandungen oder eine Bodenwandung werden vorzugsweise aus einem Material ausgebildet, das eine hohe Festigkeit besitzt, wie z.B. Ziegelsteine.

Nach einem weiteren Aspekt der vorliegenden Erfindung wird ein Wärmespeicher vorgesehen, der einen ersten Festkörper und einen zweiten Festkörper aufweist, wobei der zweite Festkörper innerhalb des ersten Festkörpers angeordnet ist, und eine Wärmeisolationsschicht zwischen dem ersten Festkörper und dem zweiten Festkörper angeordnet ist, wobei der erste Festkörper und der zweite Festkörper jeweils separat von Fließkanälen für ein Wärmeträgermedium durchzogen sind, und der zweite Festkörper ist vorzugsweise aus mehreren voneinander unabhängigen Festkörpern ausgebildet, die voneinander mittels einer Isolierung getrennt sind. Hierdurch ist es möglich, während einer Gebäudeheizperiode im Winter, bei welcher Wärme aus den Festkörpern zum Heizen des Gebäudes bzw. des Brauchswassers abgezogen wird, zumindest einen der inneren zweiten Festkörper auf eine Mindesttemperatur von zumindest 50 °C und insbesondere zumindest 60 °C bis zur nächsten Aufheizperiode zu halten. Dieser Aspekt stellt einen eigenständigen Erfindungsgedanken dar, der jedoch mit den anderen Aspekten kombinierbar ist.

Nach einem weiteren Aspekt der Erfindung wird ein Gebäude vorgesehen, das einen Wärmespeicher aufweist, der aus einem ersten Festkörper und einem zweiten Festkörper ausgebildet ist, wobei der zweite Festkörper innerhalb des ersten Festkörpers angeordnet ist, und eine Wärmeisolationsschicht zwischen dem ersten Festkörper und dem zweiten Festkörper vorgesehen ist, wobei der erste Festkörper und der zweite Festkörper jeweils separat von Fließkanälen für ein Wärmeträgermedium durchzogen sind. Das Gebäude weist eine Solarkollektoranlage auf, welche Vakuumröhren aufweist, so dass der zweite Festkörper auf Temperaturen von mehr als 100 °C und insbesondere mehr als 110 °C, vorzugsweise mehr als 120 °C erhitzt werden kann.

Mit Vakuumröhren ausgebildete Solarkollektoranlagen erlauben die Erhitzung eines Wärmeträgermediums auf Temperaturen von mehr als 100 °C. Derart hohe Temperaturen können mit dem inneren, zweiten Festkörper gespeichert und für eine Gebäudeheizperiode gehalten werden.

Ein solches Gebäude weist vorzugsweise eine unmittelbar über den Wärmespeicher angeordnete Bodenplatte auf, welche als Wärmetauscher zum Abführen überschüssiger Wärme entweder nach außen oder zurück in den Wärmespeicher ausgebildet ist. Der Begriff "unmittelbar über den Wärmespeicher" bedeutet, dass die Bodenplatte von dem äußeren, ersten Festkörper lediglich durch eine oder mehrere Isolationsschichten getrennt ist. Um den zweiten, inneren Festkörper bspw. längere Zeit auf einer Temperatur von 120 °C zu halten, ist es zweckmäßig, den ersten, äußeren Festkörper auf eine Temperatur von zumindest 65 °C, vorzugsweise zumindest 70 °C und insbesondere zumindest 75 °C bzw. zumindest 80 °C zu halten. Bei derart hohen Temperaturen des zweiten, äußeren Festkörpers wird auch bei guter Isolierung ein stetiger Wärmefluss zur Bodenplatte des Gebäudes stattfinden. Zur Vermeidung einer Überhitzung des Gebäudes ist es daher zweckmäßig, die Bodenplatte als Wärmetauscher auszubilden, bspw. indem Fließkanäle durch die Bodenplatte geführt sind, durch die ein Wärmeträgermedium fließt, so dass die Wärme abgeleitet werden kann. Es kann jedoch auch zweckmäßig sein, einen oder mehrere Festkörperspeicher, bspw. in Form von Platten zwischen der Bodenplatte und dem ersten und zweiten Festkörper vorzusehen, welche auf einer Temperatur gehalten werden, die geringer oder zumindest nicht höher als die Temperatur des äußeren ersten Festkörpers ist.

Ein weiterer Gesichtspunkt der vorliegenden Erfindung betrifft ein Wärmeträgernetz, aufweisend eine Vielzahl von Wärmeträgerkreisen einschließlich wenigstens eines Speicherkreises mit einem Wärmespeicherelement, insbesondere Festkörperspeicherelement, wenigstens eines Erzeugerkreises mit einer Wärmequelle und eines Verbraucherkreises mit einem Wärmeverbraucher, und eine Steuervorrichtung, welche ausgebildet ist, um die Wärmeträgerkreise wahlweise miteinander zu verbinden. Ein Wärmeträgernetz ist im Sinne der Erfindung ein Netz von Fließkanälen, Leitungen, Bauteilen und Armaturen, das von einem Wärmeträgermedium wenigstens abschnittweise und grundsätzlich insgesamt durchströmt oder durchströmbar ist. Als ein Wärmespeicherelement kann grundsätzlich jedes Bauteil verstanden werden, das zur Speicherung, Aufnahme und Abgabe von Wärme geeignet und ausgebildet ist. Ein Wärmespeicherelement kann auch negative Wärme speichern, d.h., eine niedrigere Temperatur als sonstige Anlagenteile aufweisen, um beispielsweise für Zwecke der Kühlung mittels des Wärmeträgermediums verwendet zu werden. Als Wärmequelle kann jedes Gerät verstanden werden, das dem Wärmeträgernetz Wärme zuführt, insbesondere Solarwärme, Fernwärme, Erdwärme oder Verbrennungswärme. Als Wärmeverbraucher kann jedes Gerät verstanden werden, das zur Nutzung oder Regulierung des Wärmeverbrauchs innerhalb des Gebäudes dient. Im hier verwendeten allgemeinen Sinn kann ein Wärmeverbraucher auch einen negativen Wärmeverbrauch haben, etwa bei Abführung von Wärme im Sinne eines Klimageräts. Da die Wärmeträgerkreise wahlweise miteinander verbunden werden, ist ein Austausch von Wärme zwischen der Wärmequelle, des Wärmeverbrauchers und dem Wärmespeicherelement ohne Zwischenwärmespeicher möglich. Dies kann auch Wärmeverluste beim Laden und Entladen des Wärmespeicherelements verringern. Dies bedeutet mit anderen Worten, dass mit diesem Wärmeträgernetz der Erzeugerkreis wahlweise mit dem Speicherkreis zum Speichern von Wärme im Wärmespeicherelement oder mit dem Verbraucherkreis zum unmittelbaren Verbrauchen der bereitgestellten Wärme verbunden werden kann.

In bevorzugten Ausführungsformen ist vorgesehen, dass die Steuervorrichtung ein elektronisches Steuergerät und eine Vielzahl von Schaltventilen aufweist, um die Wärmeträgerkreise wahlweise miteinander zu verbinden. Eine solche Steuerungsanordnung ermöglicht eine automatisierte Steuerung der Verbindung der Wärmeträgerkreise anhand von Eingangsgrößen, die beispielsweise mittels Fühlern oder sonstigen Messgebern zuführbar sein können, und eines Steuerprogramms, auf welches das Steuergerät zugreifen kann, möglich.

In bevorzugten Ausführungsformen ist vorgesehen, dass die Steuervorrichtung für jeden Speicherkreis einen Vorlaufverteiler und einen Rücklaufsammler aufweist, wobei die Erzeugerkreise jeweils mit einem Ausgangsanschluss des Vorlaufverteilers und einem Eingangsanschluss des Rücklaufsammlers wenigstens eines Speicherkreises, vorzugsweise aller Speicherkreise, verbunden sind und wobei die Verbraucherkreise jeweils mit einem Ausgangsanschluss des Vorlaufverteilers und einem Eingangsanschluss des Rücklaufsammlers wenigstens eines Speicherkreises, vorzugsweise genau eines Speicherkreises, verbunden sind, wobei vorzugsweise für jeden Speicherkreis eine Förderpumpe vorgesehen ist, die vor einem Zuflussanschluss des jeweiligen Vorlaufverteilers angeordnet ist. Im Sinne der vorliegenden Anmeldung führt ein Vorlauf zu einem wärmetechnischen Gerät bzw. von einem Wärmespeicherelement weg und führt ein Rücklauf von einem wärmetechnischen Gerät weg bzw. zu einem Wärmespeicherelement hin. Als wärmetechnisches Gerät kann jede Wärmequelle oder jeder Wärmeverbraucher verstanden werden.

In bevorzugten Ausführungsformen ist vorgesehen, dass die Schaltventile in den Vorlaufverteilern angeordnet sind, um jeweils einen Ausgangsanschluss des Vorlaufverteilers zu öffnen oder zu schließen. Auf diese Weise kann die Wärme eines Wärmespeicherelements gleichzeitig auf verschiedene Verbraucher verteilt werden.

Die Wärmequelle kann aus der Gruppe, welche eine Solarkollektoranlage, eine geothermische Wärmegewinnungsanlage, eine Wärmepumpenanlage, eine Fernwärmeentnahmestelle, und eine Verbrennungsanlage für einen festen, flüssigen oder gasförmigen Brennstoff aufweist, ausgewählt sein. Ferner kann der Wärmeverbraucher aus der Gruppe, welche einen Brauchwasserwärmetauscher, einen Raumluftheizungswärmetauscher, einen Raumluftkühlungswärmetauscher, einen Prozessluftwärmetauscher, einen Radiator, eine Fußbodenheizung, eine Wandheizung, eine Deckenheizung, einen Handtuchtrockner, und einen sonstigen Wärmetauscher aufweist, ausgewählt sein.

In bevorzugten Ausführungsformen ist vorgesehen, dass der wenigstens eine Speicherkreis wenigstens eine Speicherkreismehrheit wenigstens zweier Speicherkreise mit jeweils einem Wärmespeicherelement aufweist, wobei die Steuervorrichtung ausgebildet ist, um die Wärmespeicherelemente auf jeweils unterschiedlicher Temperatur zu halten. Durch die so erzielte Temperaturschichtung kann den Wärmeverbrauchern Wärme auf unterschiedlichen Temperaturstufen zur Verfügung gestellt werden.

In bevorzugten Ausführungsformen ist vorgesehen, dass der wenigstens eine Verbraucherkreis wenigstens eine Verbraucherkreismehrheit wenigstens zweier Verbraucherkreise mit jeweils einem Brauchwasserwärmetauscher aufweist, wobei die Steuervorrichtung ausgebildet ist, um jeden der wenigstens zwei Verbraucherkreise der Verbraucherkreismehrheit mit einem der wenigstens zwei Speicherkreise der Speicherkreismehrheit zu verbinden, wobei die Brauchwasserwärmetauscher mit einer Brauchwasserleitung so verbunden sind, dass deren Strömungsrichtung einer Reihenfolge zunehmender Temperatur der Wärmespeicherelemente der jeweils verbundenen Speicherkreisen entspricht. Mit der so vorgesehenen durchlaufenden Erwärmung des Brauchwassers kann ein Stehen warmen Brauchwassers vermieden und so die Bildung von Keimen erschwert werden. Durch die stufenweise Erwärmung kann der Verbrauch der auf hohem Temperaturniveau gespeicherten Wärme reduziert werden.

In bevorzugten Ausführungsformen ist vorgesehen, dass der wenigstens eine Speicherkreis einen Kühlspeicherkreis aufweist mit Fließkanälen für das Wärmetauschermedium, die in einer passiven Wärmesenke, insbesondere im Erdboden oder einem Gewässer, angeordnet sind, wobei vorzugsweise der wenigstens eine Verbraucherkreis wenigstens einen Wärmeabführungskreis mit einem Wärmeaufnahmeelement aufweist, der mit einem Ausgangsanschluss des Vorlaufverteilers und einem Eingangsanschluss des Rücklaufsammlers des Kühlspeicherkreises verbunden ist. Auf diese Weise kann eine Überhitzung der Wärmespeicherelemente und anderer Komponenten des Wärmeträgernetzes wirksam vermieden werden. Durch eine Wärmeabführungskreis kann auch eine Kühlung des Gebäudes verwirklicht werden.

In bevorzugten Ausführungsformen ist vorgesehen, dass das Wärmeaufnahmeelement aus der Gruppe, welche einen Raumluftheizungswärmetauscher, einen Raumluftkühlungswärmetauscher, einen Raumluftwärmetauscher, einen Außenluftwärmetauscher, einen Prozessluftwärmetauscher und eine oberhalb eines Wärmespeicherelements wenigstens eines des wenigstens einen Wärmespeicherkreises unmittelbarer Nähe des Wärmespeicherelements angeordnete und von Fließkanälen für Wärmeträgermedium durchzogene Kühlplatte aufweist, ausgewählt ist oder mit einem Heizelement, insbesondere einer Boden-, Wand- oder Deckenheizung zusammenfällt.

Das Wärmeträgernetz kann einen Wärmespeicher nach dem vorstehend beschriebenen ersten Erfindungsgesichtspunkt aufweisen, wobei der erste Festkörper und der zweite Festkörper Wärmespeicherelemente eines jeweiligen Speicherkreises sind. Das Wärmeträgernetz ist in seinem Aufbau und seiner Funktion auf einen solchen Wärmespeicher ausgerichtet und kann daher von dessen vorstehend beschriebenen Vorteilen in allen Ausführungsformen und Abwandlungen Gebrauch machen.

Weitere Aufgaben, Merkmale, Vorteile und sonstige Wirkungen der vorliegenden Erfindungen werden aus der nachstehenden Beschreibung spezieller Ausführungsbeispiele ersichtlich werden. Zur Veranschaulichung der Ausführungsbeispiele wird auf die beigefügte Zeichnung Bezug genommen. Dabei zeigt
Fig. 1 ein Wärmeträgernetz mit einem Wärmespeicher nach einem ersten Ausführungsbeispiel der vorliegenden Erfindung; und
Fig. 2 ein Wärmeträgernetz mit einem Wärmespeicher nach einem zweiten Ausführungsbeispiel der vorliegenden Erfindung.

Die vorliegende Erfindung wird nun anhand eines bevorzugten Ausführungsbeispiels unter Bezugnahme auf die begleitenden Zeichnungen ausführlich beschrieben werden. Dabei ist zu verstehen, dass die bildlichen Darstellungen rein schematisch und nicht notwendigerweise maßstabsgetreu sind. Ebenso ist darauf hinzuweisen, dass die Zeichnungen und die nachfolgende Beschreibung zur Wahrung der Knappheit und Klarheit sich auf die zum Verständnis der Erfindung hilfreichen Merkmale konzentrieren und für den Fachmann selbstverständliche Elemente, wie z.B. Rückschlagventile oder hydraulische Komponenten, weggelassen sind. Gleichwohl soll durch das Vorsehen und die Zusammenwirkung der in den Ausführungsbeispielen beschriebenen Einzelmerkmale der Schutzbereich der vorliegenden Erfindung, der durch die beigefügten Ansprüche im breitesten Sinne definiert ist, eingeschränkt werden.

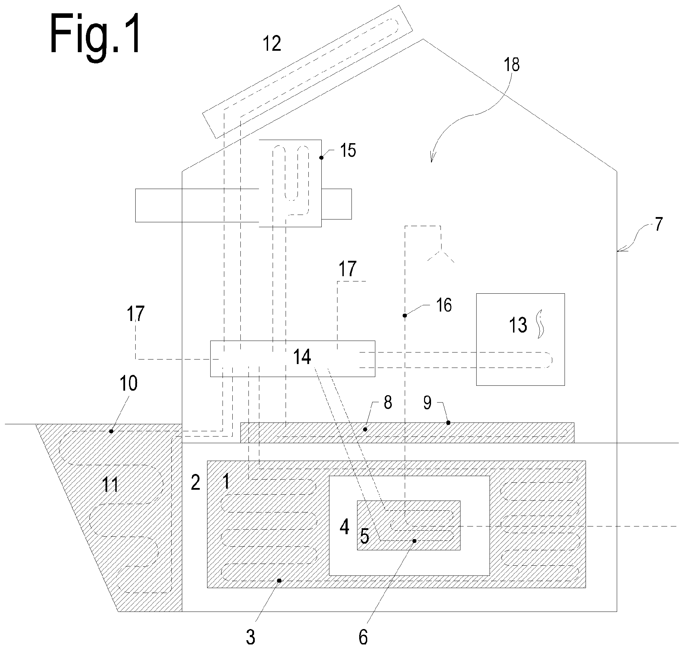

Fig. 1 zeigt ein Wärmeträgernetz 18 für ein Gebäude 7 mit einem Festkörperspeicher nach einem ersten Ausführungsbeispiel der vorliegenden Erfindung.

Ein erster Festkörper 1 ist mit einer Außendämmung 2 umhüllt und ist von ersten Fließkanälen 3 für ein Wärmeträgermedium durchzogen. In dem ersten Festkörper 1 ist ein zweiter Festkörper 5 aufgenommen, der mit einer Zwischendämmung 4 umhüllt und von zweiten Fließkanälen 6 für ein Wärmeträgermedium durchzogen ist. Der erste Festkörper 1 mit Außendämmung 2 und dem zweiten Festkörper 5 mit Zwischendämmung 4 ist in diesem Ausführungsbeispiel in einem von Erdreich 11 umgebenen Kellerraum des Gebäudes 7 untergebracht. Zwischen der Außendämmung 2 des Festkörperspeichers 1 und einem Innenraum des Gebäudes 7, genauer gesagt, oberhalb der Außendämmung 2, ist eine Bodenplatte 9 mit dritten Fließkanälen 8 für ein Wärmeträgermedium angeordnet. Im Erdreich 11 sind zusätzliche Fließkanäle, die als Wärmeabgaberegister 10 bezeichnet werden, angeordnet. Die Fließkanäle 3, 6, 8 und 10 sind mit einer Steuervorrichtung 14 verbunden, um jeweilige Wärmeträgerkreise auszubilden. In die Steuervorrichtung 14 münden auch Wärmeträgerkreise eines Sonnenkollektoranlage 12, einer externen Wärmequelle wie etwa hier einer Verbrennungsanlage 13, und einer Lüftungsanlage 15.

Alle Wärmeträgerkreise sind mittels der Steuerungsanlage 14 einzeln steuerbar und ggf. miteinander verbindbar. D.h., ein Strom jedes der Wärmeträgerkreise ist durch die Steuervorrichtung 14 regulierbar, etwa durch Öffnen oder Schließen eines jeweiligen Vorlauf- und/oder Rücklaufventils und/oder Ansteuern einer jeweiligen Förderpumpe (nicht näher dargestellt). An die Steuerungsanlage 14 sind verschiedene Fühler 17 wie etwa Außen- und Innentemperaturfühler und/oder andere Informations- bzw. Steuerungsquellen angeschlossen, um Eingangsgrößen zur Steuerung der jeweiligen einzelnen Wärmeträgerkreise zu liefern. Dabei kann der Wärmeträgerkreis der ersten Fließkanäle 3 (also des ersten Festkörpers 1) auch als Niedertemperatur-Speicherkreis bezeichnet werden, kann der Wärmeträgerkreis der zweiten Fließkanäle 3 (also des zweiten Festkörpers 5) auch als Hochtemperatur-Speicherkreis bezeichnet werden, kann der Wärmeträgerkreis der dritten Fließkanäle 8 (also der Bodenplatte 9) auch als Fußbodenkreis bezeichnet werden, kann der Wärmeträgerkreis des Wärmeabgaberegisters 10 auch als Wärmeabgabekreis bezeichnet werden, kann der Wärmeträgerkreis der Sonnenkollektoranlage 12 auch als Kollektorkreis bezeichnet werden, kann der Wärmeträgerkreis der Verbrennungsanlage 13 auch als Zusatzheizkreis oder Nachheizkreis bezeichnet werden, und können Wärmeträgerkreise der Außen- und Innenluftwärmetauscher der Lüftungsanlage 15 auch als Klimatisierungskreis bezeichnet werden. Eine Brauchwasserleitung 16 verläuft durch den ersten Festkörper 1 und durch den zweiten Festkörper 5 zu Verbrauchsstellen. Alle Wärmeträgerkreise führen vorzugsweise das gleiche Wärmeträgermedium, insbesondere Wasser. In einer Abwandlung kann der Kollektorkreis ein anderes, insbesondere ein mit einem Frostschutzmittel versetztes Wärmeträgermedium führen. Ein solches Frostschutzmittel erhöht auch den Siedepunkt des Wassers, wodurch ein solches Wärmeträgermedium auf Temperaturen von über 100 °C erhitzt werden kann. Die Verwendung von Frostschutzmittel ist insbesondere in Verbindung mit Vakuumröhren aufweisenden Kollektoren vorteilhaft. Ein geeignetes Frostschutzmittel ist bspw. Glykol.

Der erste Festkörper 1 und der zweite Festkörper 5 können zusammen und mit ihren Dämmungen 2, 4 und Fließkanälen 3, 6 als Festkörper-Wärmespeicher, genauer gesagt, als Mehrfestkörper-Wärmespeicher, in diesem Fall als Doppelfestkörper-Wärmespeicher verstanden werden. Im Betrieb wird die von der Sonnenkollektoranlage 12 gelieferte Wärme durch die Steuerungsanlage 14 über die ersten Fließkanäle 3 dem ersten Festkörper 1 und über die zweiten Fließkanäle 6 dem zweiten Festkörper 5 zugeführt. Dabei wird der innere zweite Festkörper 5 auf einer höheren Temperatur gehalten als der äußere erste Festkörper 1. Bei Absinken der insgesamt gespeicherten Wärme unter einen Mindestwert kann die externe Wärmequelle 13 zugeschaltet werden. Über die Steuerungsanlage 14 kann auch Wärme zwischen dem ersten Festkörper und dem zweiten Festkörper 5 ausgetauscht werden, um die gewünschte Temperaturschichtung oder gewünschte Temperaturbereiche einzuhalten.

Über die Lüftungsanlage 15 und/oder die Bodenplatte 9 kann eine Raumtemperatur innerhalb des Gebäudes 7 reguliert werden. Dabei kann die Bodenplatte 9 als Fußbodenheizung und kann die Lüftungsanlage 15 als Warmluftquelle dienen oder kann überschüssige Wärme über die Bodenplatte 9 und/oder die Lüftungsanlage 15 aufgenommen und mittels der Steuerungsanlage 14 entweder in die Festkörper 1, 5 zurückgeführt oder, insbesondere in der warmen Jahreszeit, über das Wärmeabgaberegister 10 an das Erdreich 11 abgegeben werden. Die Bodenplatte 9 dient auch dazu, durch die Außendämmung 2 hindurchtretende Wärme aufzunehmen und ggf. abzuführen, um eine Überhitzung des Fußbodens zu vermeiden. Das Wärmeabgaberegister 10 kann ringförmig oder an ausgewählten Stellen um das Gebäude 7 herum im Erdreich 11 angeordnet sein, was auch die vorteilhafte Wirkung zeitigt, dass Wege oder Terrassen länger von Eis bzw. Schnee frei gehalten werden können oder gebäudenahe Pflanzungen länger vor Bodenfrost geschützt sind. Es versteht sich, dass für jede Etage, ggf. für jede Wohneinheit oder auch jeden Raum, des Gebäudes 7 eine eigene Bodenplatte 9 vorgesehen sein kann. Anstelle einer separaten Bodenplatte 9 kann auch eine bereits vorhandene Fußbodenheizung den gleichen Zweck erfüllen.

Brauchwasser wird durch die durch den ersten Festkörper 1 und den wärmeren zweiten Festkörper 5 verlaufende Warmwasserleitung 16 erwärmt und kann an der Verbrauchsstelle mit kaltem Brauchwasser gemischt werden. Durch geeignete Maßnahmen kann auch sichergestellt werden, dass das Warmwasser unterhalb einer vorgegebenen Maximaltemperatur bleibt.

Wenn das Gebäude 7 gut isoliert ist und vorzugsweise eine Zwangsventilation mit Wärmetauscher und/oder einen elektronisch gesteuerten Sonnenschutz aufweist, ist es möglich, das Haus vollständig alleine mit Sonnenkollektoren zu beheizen und die Wärme im Sommer zu speichern und im Winter zu verbrauchen. Die Kollektoren sind vorzugsweise aus Vakuumröhren ausgebildet, damit auch im Winter eine hohe Temperatur erreicht werden kann. Vakuumröhren bieten auch den Vorteil, dass das Wärmeträgermedium auf Temperaturen von mehr als 100 °C erhitzt werden kann, womit eine dementsprechend hohe Erhitzung der Festkörper 1, 5 möglich ist.

Die Festkörper 1, 5 können eine Schüttung aus Steinen, Beton oder sonstigem Festmaterial sein. Sind es einzelne Festmaterialstücke, dann können sie auch mittels Zement gebunden sein. Diesem Speicher liegt die Erkenntnis zugrunde, dass der Wärmefluss proportional zum Temperaturunterschied ist. Durch die zweistufige Ausbildung des Wärmespeichers kann der Kern (zweiter Festkörper 5) auf einer relativ hohen Temperatur gehalten werden, ohne dass der Wärmeverlust zu groß wird, da die Umgebung, also der äußere Speicher (der erste Festkörper 1), auch auf einer höheren Temperatur liegt. Im Herbst, nach der Aufheizperiode beträgt z.B. die Temperatur des äußeren Speichers ca. 75 °C und des Kerns 110 - 120 °C.

Das Isolationsmaterial zwischen dem Kern und dem äußeren Speicher ist beispielsweise Glasschaum oder Kunststoff. Das Isolationsmaterial kann plattenförmig ausgebildet sein. Glasschaum kann hohe mechanische Beanspruchungen aufnehmen. Es kann z.B. auch derart ausgebildet sein, dass die Unterseite des Kernes auf Glasschaum aufliegt und so gegen den äußeren Speicher isoliert ist, wobei der Glasschaum das Gewicht des Kernes trägt. Der restliche Abschnitt der Isolation dann aus Kunststoff ausgebildet sein. Das Wärmeabgaberegister 10 kann direkt im Erdreich 11 vergraben oder in einem separaten Festkörperblock angeordnet sein, der seinerseits im Erdreich 11 eingelassen ist.

Das Isolationsmaterial kann auch aus Ziegelsteinen und/oder Porenbetonsteinen ausgebildet sein. Die Ziegelsteine entsprechen vorzugsweise der Norm DIN 105 bzw. EN 771. Die Ziegelsteine besitzen Poren und Mikroporen, so dass sie sehr gut isolieren. Vorzugsweise sind die Ziegelsteine porosierte Ziegelsteine oder porosierte Hochlochziegelsteine. Zudem besitzen Ziegelsteine eine hohe Festigkeit, so dass die Isolation zugleich eine tragende Funktion übernehmen kann. Porenbetonsteine besitzen noch bessere Isolationseigenschaften als Ziegelsteine. Die Festigkeit von Porenbetonsteinen ist jedoch geringer als die von Ziegelsteinen. Vorzugsweise wird eine äußere Wanne als Außendämmung 2 aus Ziegelsteinen ausgebildet. Diese kann sowohl eine Isolationsfunktion als auch eine tragende Funktion übernehmen. Soll die Isolation keine tragende Funktion ausüben, kann eine Isolationsschicht bzw. Isolationswandung vollständig aus Porenbetonsteinen ausgebildet sein. Die Isolation kann auch aus einer Schicht Ziegelsteinen und einer angrenzenden Schicht Porenbetonsteinen ausgebildet sein, wodurch eine hohe Festigkeit und eine sehr gut Wärmedämmung erzielt wird.

Durch die getrennten Festkörper 1, 5 kann eine Temperaturschichtung im Wärmespeicher erzielt werden und kann der Temperatursprung zwischen Wärmespeicher und Umgebung gering gehalten werden. Zur Verfeinerung der Temperaturschichtung können mehr als zwei Festkörper vorgesehen sein. Grundsätzlich kann bei entsprechender Auslegung der Leistung der Sonnenkollektoranlage 12 und der Kapazität der Festkörper 1, 5 die über das Jahr benötigte Wärmemenge des Gebäudes 7 vollständig aus der erneuerbaren Solarenergie gewonnen werden. Das Prinzip des Speichers im Speicher und der angrenzenden Nutzräume und des im Vergleich zur Winterluft wärmeren Erdreiches ermöglicht geringere Energieverluste. Grundsätzlich reichen kleinere Sonnenkollektorflächen aus, weil auch die Nutzung der überschüssigen Sommer-Wärmeenergie bis im Winter möglich ist. Selbstverständlich können auch andere regenerative Energien wie etwa geothermische Energie oder Wärme aus Wärmepumpenanlagen anstelle oder zusätzlich zu der Sonnenkollektoranlage 12 eingebunden werden. Ein Überbedarf kann durch die Verbrennungsanlage 13 gedeckt werden. Für die Festkörper 1, 5 können kostengünstige, umweltfreundliche und recyclingfähige Materialien - auch etwa Bauschutt oder Schotter aus der Baugrube - verwendet kann oder wiederverwendet werden. Grundsätzlich sind bei Festkörperspeichern höhere Temperaturen (über 100 °C) als beim Wasserspeicher möglich; daher weist der Festkörperspeicher eine hohe Energiedichte auf. Der Festkörperspeicher selbst ist wartungsfrei und nutzflächensparend. Durch die wärmeisolierte Unterbringung in einer wasserdichten Betonwanne können wassergeleitete Wärmeverluste an das Erdreich unabhängig von Grundwasserspiegel vermieden werden.

Nach einer bevorzugten Abwandlung ist der innere zweite Festkörper 5 aus mehreren voneinander unabhängigen Festkörpern ausgebildet, die voneinander mittels einer Isolierung getrennt sind. Während einer Gebäudeheizperiode im Winter, bei welcher Wärme aus den Festkörpern zum Heizen des Gebäudes bzw. des Brauchwassers abgezogen wird, wird zumindest einer der inneren Festkörper 5 auf einer Mindesttemperatur von zumindest 50 °C und insbesondere zumindest 60 °C bis zur nächsten Aufheizperiode gehalten, bei welcher die Festkörper 1, 5 wieder aufgeheizt werden. Eine solche Mindesttemperatur ist zum Heizen des Brauchwassers notwendig.

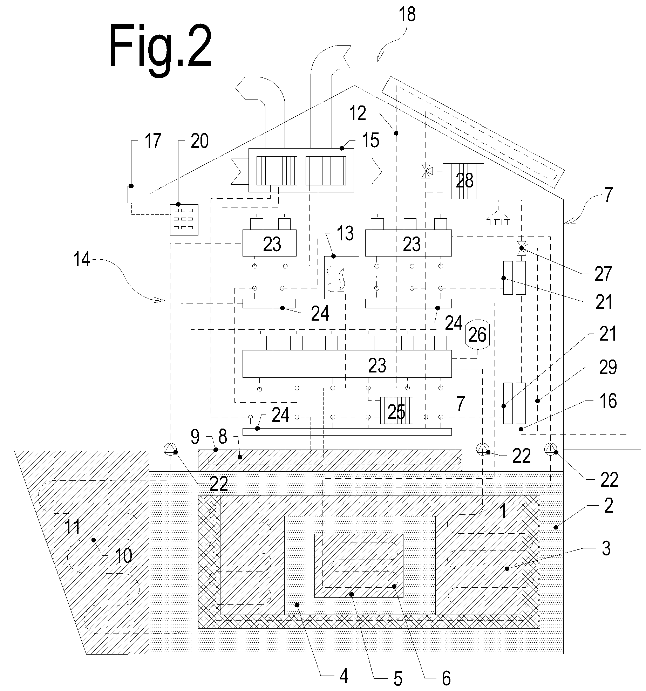

Fig. 2 zeigt ein Wärmeträgernetz 18 für ein Gebäude 7 mit einem Festkörperspeicher nach einem zweiten Ausführungsbeispiel der vorliegenden Erfindung. Das Wärmeträgernetz dieses Ausführungsbeispiels kann als eine Abwandlung des Wärmeträgernetzes 18 des ersten Ausführungsbeispiels verstanden werden. Soweit nachstehend nichts anderes gesagt ist, sind die Erläuterungen bezüglich des ersten Ausführungsbeispiels auch auf das vorliegende Ausführungsbeispiel zu beziehen.

Insbesondere ist der Aufbau des Doppelfestkörper-Wärmespeichers 1-6, der Bodenplatte 9 mit Fließkanälen 8 und des Wärmeabgaberegisters 10 im Erdreich 11 mit demjenigen des ersten Ausführungsbeispiels identisch mit Ausnahme dessen, dass der erste Festkörper 1 mit einer zusätzlichen Umhüllung 19 versehen ist. Die Umhüllung 19 kann flüssigkeitsdicht ausgelegt sein und bei Austreten von Wärmeträgermedium aus einem der Fließkanäle 3, 6 die Außendämmung 2 und die Hülle des Gebäudes 7 schützen.

Das Wärmeträgernetz 18 dieses Ausführungsbeispiels weist auch eine Steuerungsanlage 14 auf, die in Fig. 2 detaillierter dargestellt ist. Genauer gesagt weist die Steuerungsanlage 14 in diesem Ausführungsbeispiel ein Steuergerät 20, jeweils eine Förderpumpe 22, einen Vorlaufverteiler 23 und einen Rücklaufsammler 24 für den Niedertemperatur-Speicherkreis (erster Festkörper 1), den Hochtemperatur-Speicherkreis (zweiter Festkörper 5) und den Wärmeabgabekreis (Wärmeabgaberegister 10), ein Überlaufgefäß 26, ein Brauchwassermischventil 27 und ein Wärmeabgabeelement 28 auf.

Anders als in dem ersten Ausführungsbeispiel wird das Brauchwasser im vorliegenden Ausführungsbeispiel durch zwei Brauchwasser-Wärmetauscher 21 erwärmt, was nachstehend genauer zu beschreiben sein wird. Auch wird in diesem Ausführungsbeispiel davon ausgegangen, dass alle Wärmeträgerkreise, also auch der Kollektorkreis der Solarkollektoranlage 12 das gleiche Wärmeträgermedium, insbesondere Wasser, führen. Die Übertragung der Wärme von einem zu einem anderen Wärmeträgerkreis erfolgt nicht durch Wärmetauscher; vielmehr können Wärmeträgerkreise durch die Vorlaufverteiler 23 und Rücklaufsammler 25 wahlweise miteinander verbunden werden.

Die Förderpumpen 22 führen jeweils Wärmeträgermedium des entsprechenden Wärmeträgerkreise dem zugeordneten Vorlaufverteiler 23 zu. Das Überlaufgefäß 26 ist dem Niedertemperatur-Speicherkreis zugeordnet und an dessen Vorlaufverteiler 23 angeschlossen. Die Vorlaufverteiler 23 weisen jeweils eine Vielzahl von Ausgangsanschlüssen auf, die elektromagnetisch schaltbaren Abzweigventilen, kurz Schaltventile genannt, zugeordnet sind. Das Steuergerät 20 ist mit Fühlern 17 als Eingangsgrößengeber verbunden und ist mit Steueranschlüssen der Schaltventile der Vorlaufverteiler 23 verbunden. So kann das Steuergerät 20 die Schaltventile der Vorlaufverteiler 23 individuell schalten. Die Rücklaufsammler 24 sind in diesem Ausführungsbeispiel nicht geschaltet.

Der Kollektorkreis (Sonnenkollektoranlage 12) und der Zusatzheizkreis (externe Energiequelle 13) sind jeweils zwischen Vorlaufverteiler 23 und Rücklaufsammler 24 sowohl des Niedertemperatur-Speicherkreises als auch des Hochtemperatur-Speicherkreises eingebunden. D.h., sowohl der erste Festkörper 1 als auch der zweite Festkörper 5 können durch die Sonnenkollektoranlage 12 und die externe Energiequelle 13 unabhängig voneinander thermisch aufgeladen werden. Die Solarkollektoren werden durch das Wärmeabgabeelement 28 mit zugehörigem Mischer vor Überhitzung geschützt.

Ein Raumluftheizungswärmetauscher und ein Raumluftkühlungswärmetauscher, Raumluftwärmetauscher und ein Außenluftwärmetauscher der Lüftungsanlage 15 sind mit getrennten Klimatisierungskreisen zwischen Vorlaufverteiler 23 und Rücklaufsammler 24 des Niedertemperatur-Speicherkreises und des Wärmeabgabekreises eingebunden. D.h., die Lüftungsanlage 15 kann den Innenräumen des Gebäudes 7 sowohl gekühlte als auch erwärmte Frisch- oder Umluft zuführen.

Ein Heizkörper 25 ist zwischen Vorlaufverteiler 23 und Rücklaufsammler 24 des Niedertemperatur-Speicherkreises eingebunden. Ein weiterer Heizkörper bzw. Wärmeabgeber 28 ist direkt in den Wärmeträgerkreis der Sonnenkollektoranlage 12 eingebunden. Da die Raumtemperatur grundsätzlich über die Bodenplatte 9 und die Lüftungsanlage 15 regulierbar ist, kann der Heizkörper 25 auf spezielle Anwendungen wie etwa Handtuchtrockner beschränkt sein. Der Wärmeabgeber 28 soll der Überschreitung der maximalen (z.B. 130 Grad) Temperatur der Anlage am Sonnenkollektor entgegenwirken.

Die Brauchwasserleitung kann sich in einen Warmwasserzweig 16 und einen Kaltwasserzweig 29 aufteilen, wobei der Warmwasserzweig 16 durch die Brauchwasser-Wärmetauscher 21 geführt wird und der Kaltwasserzweig 29 die Brauchwasser-Wärmetauscher 21 umgeht. Einer der Brauchwasser-Wärmetauscher 21 ist zwischen Vorlaufverteiler 23 und Rücklaufsammler 24 des Niedertemperatur-Speicherkreises, der andere zwischen Vorlaufverteiler 23 und Rücklaufsammler 24 des Hochtemperatur-Speicherkreises angeschlossen. Der Warmwasserzweig der Brauchwasserleitung 16 wird zuerst durch den Brauchwasser-Wärmetauscher 21 des Niedertemperatur-Speicherzweigs und dann durch den Brauchwasser-Wärmetauscher 21 des Hochtemperatur-Speicherzweigs geführt. D.h., das Brauchwasser wird zuerst durch den Festkörperspeicher 1 und erst dann durch den wärmeren Festkörperspeicher 5 mittels der Brauchwasser-Wärmetauscher 21 aufgewärmt. Hinter den Brauchwasser-Wärmetauschern 21 werden der Warmwasserzweig 16 und der Kaltwasserzweig 29 über ein Brauchwasser-Mischventil 27 wieder zusammengeführt, um an einem Verbraucher eine gewünschte Brauchwassertemperatur zu regulieren. Die Besonderheit dieser Steuerung liegt darin, dass der Wasserkreislauf der Warmwasserverbraucher jeweils mit einem Paar Brauchwasser-Wärmetauschern 21 an die Wärmeträgerkreise gekoppelt ist. Ein erster Brauchwasser-Wärmetauscher 21 ist mit dem Kreislauf gekoppelt, der durch den äußeren, kühleren Festkörper 1 führt, und der zweite Brauchwasser-Wärmetauscher 21 ist mit dem Kreislauf gekoppelt, der durch den zweiten, heißeren Festkörper 5 des Speichers führt. Mit dem ersten Wärmetauscher wird das Brauchwasser vorgewärmt, und mit dem zweiten Wärmetauscher wird dann das vorerwärmte Brauchwasser auf die Nutztemperatur von beispielsweise 55 °C aufgewärmt. Hierdurch wird die Wärmemenge, die aus dem zweiten Festkörper 5, dem Kern, abgezogen wird, gering gehalten. Mit der heißen, kostbaren Wärme wird somit sehr sparsam umgegangen.

Es können mehrere solcher Paare von Brauchwasser-Wärmetauschern 21 vorgesehen sein, um in einzelnen Räumen oder Gebäudeabschnitten jeweils Brauchwasser mit der gewünschten Temperatur bereitzustellen.

Theoretisch wäre es auch denkbar, das Brauchwasser direkt mit dem ersten und/oder zweiten Festkörper zu erwärmen. Jedoch kann es sein, dass das Wasser längere Zeit steht und es grundsätzlich nicht möglich ist, dann dieses Wasser auf eine höhere Temperatur zu erhitzen. Dadurch würde bei einer solchen Ausgestaltung die Gefahr von Legionellen erhöht werden. Bei der erfindungsgemäßen Anordnung mit einem Paar Brauchwasser-Wärmetauschern 21, bei welchen den Brauchwasser-Wärmetauschern 21 immer frisches Wasser zugeführt wird, das dann erhitzt wird, besteht keine Legionellengefahr.

In diesem Ausführungsbeispiel sind alle Komponenten der Anlage, egal ob Wärmequellen 12, 13, 15 oder Wärmeabgabenelemente 8, 10, 15, 25, 28 ohne weitere Wärmetauscher miteinander hydraulisch verbunden und verwenden das gleiche Wärmeträgermedium bzw. benötigen nur ein einziges Ausdehnungsgefäß 26. Für die Zirkulation sorgen die Pumpen 22 und Vorlaufverteiler 23, von denen nur je eine(r) pro Festkörper installiert ist (das Erdreich 11 kann in diesem Sinne als Festkörper verstanden werden).

Der erste Festkörper 1 und der zweite Festkörper 5 sind Wärmespeicherelemente im Sinne der Erfindung, desgleichen ist das Erdreich 11 eine passive Wärmesenke. Im Sinne der vorliegenden Erfindung bilden die ersten Fließkanäle 3 mit erstem Festkörper 1 samt zugehöriger Verrohrung mit Förderpumpe 22 einen Speicherkreis, bilden die zweiten Fließkanäle 6 mit zweitem Festkörper 5 samt zugehöriger Verrohrung mit Förderpumpe 22 einen anderen Speicherkreis, bilden die Fließkanäle des Wärmeabgaberegisters 10 im Erdreich 11 samt zugehöriger Verrohrung mit Förderpumpe 22 einen weiteren Speicherkreis, hier insbesondere Kühlspeicherkreis, bilden die Solarkollektoranlage 12 und die Verbrennungsanlage 13 samt zugehöriger Verrohrung jeweilige Erzeugerkreise, und bilden die Außen- und Raumluftwärmetauscher der Lüftungsanlage 15, die Brauchwasser-Wärmetauscher 21, der Radiator 25 und die Bodenplatte 9 samt zugehöriger Verrohrung jeweilige Verbraucherkreise, wobei die Außen- und Raumluftwärmetauscher der Lüftungsanlage 15 und die Bodenplatte 9, die sowohl in Heiz- als auch in Kühlrichtung betrieben werden können, samt zugehöriger Verrohrung auch als Wärmeabführungskreis verstanden werden können, und alle diese Speicherkreise, Erzeugerkreise und Verbraucherkreise sind Wärmeträgerkreise im Sinne der Erfindung. Es ist anzumerken, dass alle Wärmeträgerkreise offene Kreise sind und erst durch Verschaltung wenigstens eines Speicherkreises mit wenigstens einem Erzeuger- oder Verbraucherkreis durch die Vorlaufverteiler 23 und Rücklaufverteiler 25 ein Kreislauf des Wärmeträgermediums geschlossen wird. Die Vorlaufverteiler 23 und Rücklaufverteiler 25 bilden zusammen mit dem Steuergerät 20 und Fühlern 17 eine Steuerungsvorrichtung.

Auch bei dieser Ausführungsform kann bei entsprechender Auslegung grundsätzlich die gesamte benötigte Wärmeenergie des Gebäudes 7 aus erneuerbarer Solarenergiequelle gewonnen werden. Auch sind höhere Temperaturen (über 100 Grad) als beim Wasserspeicher möglich; dadurch kann eine große Energiedichte erzielt werden. Es reichen kleinere Sonnenkollektorflächen aus, weil auch die Nutzung der überschüssigen Sommer-Wärmeenergie bis im Winter möglich. Aufgrund des Speichers im Speicher und der angrenzenden Nutzräume und des im Vergleich zur Winterluft wärmeren Erdreiches sind geringe Energieverluste zu erwarten. Es werden kostengünstige, umweltfreundliche und recyclingfähige Materialien verwendet - auch Bauschutt oder Schotter aus der Baugrube kann wiederverwendet werden. Die Anbindungen aller Wärmeträgerkreise der Anlage ohne Wärmetauscher kann die Wärmeverluste weiter verringern. Unabhängig von der Zahl der angeschlossenen Verbraucher ist nur eine Zirkulationspumpe je Festkörper erforderlich. Es ist möglich alle Verbraucher mit nur einer Zirkulationspumpe zu betreiben. Bei einer solchen Ausführungsform sind zusätzliche Weichen vorzusehen, die entsprechend vom Steuergerät angesteuert werden, was die Steuerung wesentlich komplizierter macht. Durch das Wärmeabgaberegister im Freien kann ein sehr einfacher Überhitzungsschutz verwirklicht werden. Die gesamte Anlage ist weitgehend wartungsfrei und nutzflächensparend.

Die oben beschriebene Art der Verknüpfung der einzelnen Elemente des Heizsystems kann auch mit anderen als dem hier vorgestellten Wärmespeicher angewendet werden. Die beschriebenen Ausführungsformen beinhalten auch eine Verbrennungsanlage, die in das System integriert ist. Diese Verbrennungsanlage wird, wenn der hier beschriebene Wärmespeicher verwendet wird, nur im Notfall (z.B. bei falscher Nutzung durch offene Fenster im Winter) benötigt. Im Normalfall ist die Anlage so auszulegen, dass der Wärmebedarf des Gebäude 7 auch vollständig ohne zusätzliche Wärmequellen wie etwa Brenner, Fernwärme, Wärmepumpen oder dergleichen gedeckt werden kann.

Eine weitere Abwandlung sieht vor, dass die Leitungen zum Leiten des Wärmemediums kreuz und quer gleichzeitig geführt sind, sodass auch das aus den Wärmeenergiequellen wie etwa der Solarkollektoranlage 12 oder der Verbrennungsanlage 13 gelieferte erhitzte Wärmeträgermedium gleichzeitig und direkt bei einem der Brauchwasser-Wärmetauscher 21 im Gebäude zugeführt werden kann. Je nach Temperatur des Wärmeträgermediums wird dieses Wärmeträgermedium dem ersten oder dem zweiten Brauchwasser-Wärmetauscher zugeführt. Entsprechendes gilt auch für andere Verbraucher. Zu diesem Zweck kann eine Schaltmatrix vorgesehen sein, bei der zusätzlich zu den Vorlaufverteilern 23 und Rücklaufsammlern 24 für die Speicherkreise auch schaltbare Rücklaufverteiler für die Erzeugerkreise und Vorlaufsammler für die Verbraucherkreise vorhanden sind, sodass Erzeuger-, Verbraucher- und Speicherkreise beliebig verbindbar sind. Auch können zusätzliche Pumpen zumindest in den Erzeugerkreisen vorgesehen sein, um bei direkter Verbindung mit den Verbraucherkreisen den erforderlichen Förderdruck bereitzustellen. Diese Pumpen können mit den Förderpumpen 22 der Speicherkreise synchronisierbar sein, um Unterdruck oder Überlauf in einem der Kreise zu vermeiden.

Nachfolgend sind Beispiele für unterschiedliche Ausführungsformen eines Wärmeträgernetzes angegeben:
1. Wärmeträgernetz (18), aufweisend eine Vielzahl von Wärmeträgerkreisen einschließlich wenigstens eines Speicherkreises mit einem Wärmespeicherelement (1, 4, 11), insbesondere Festkörperspeicherelement, wenigstens eines Erzeugerkreises mit einer Wärmequelle (12, 13) und eines Verbraucherkreises mit einem Wärmeverbraucher (9, 15, 21, 25), und eine Steuervorrichtung (14), welche ausgebildet ist, um die Wärmeträgerkreise wahlweise miteinander zu verbinden.
2. Wärmeträgernetz (18) nach Beispiel 1, dadurch gekennzeichnet, dass die Steuervorrichtung (14) ein elektronisches Steuergerät (20) und eine Vielzahl von Schaltventilen aufweist, um die Wärmeträgerkreise wahlweise miteinander zu verbinden.
3. Wärmeträgernetz (18) nach Beispiel 2, dadurch gekennzeichnet, dass die Steuervorrichtung (14) für jeden Speicherkreis einen Vorlaufverteiler (23) und einen Rücklaufsammler (24) aufweist, wobei die Erzeugerkreise jeweils mit einem Ausgangsanschluss des Vorlaufverteilers (23) und einem Eingangsanschluss des Rücklaufsammlers (24) wenigstens eines Speicherkreises, vorzugsweise aller Speicherkreise, verbunden sind und wobei die Verbraucherkreise jeweils mit einem Ausgangsanschluss des Vorlaufverteilers (23) und einem Eingangsanschluss des Rücklaufsammlers (24) wenigstens eines Speicherkreises, vorzugsweise genau eines Speicherkreises, verbunden sind, wobei vorzugsweise für jeden Speicherkreis eine Förderpumpe (22) vorgesehen ist, die vor einem Zuflussanschluss des jeweiligen Vorlaufverteilers (23) angeordnet ist.
4. Wärmeträgernetz (18) nach Beispiel 3, dadurch gekennzeichnet, dass die Schaltventile in den Vorlaufverteilern (23) angeordnet sind, um jeweils einen Ausgangsanschluss des Vorlaufverteilers (23) zu öffnen oder zu schließen.
5. Wärmeträgernetz (18) nach einem der Beispiele 1 bis 4, dadurch gekennzeichnet, dass die Wärmequelle ausgewählt ist aus der Gruppe, welche eine Solarkollektoranlage (12), eine geothermische Wärmegewinnungsanlage, eine Wärmepumpenanlage, eine Fernwärmeentnahmestelle, und eine Verbrennungsanlage (13) für einen festen, flüssigen oder gasförmigen Brennstoff aufweist.
6. Wärmeträgernetz (18) nach einem der Beispiele 1 bis 5, dadurch gekennzeichnet, dass der Wärmeverbraucher ausgewählt ist aus der Gruppe, welche einen Brauchwasserwärmetauscher (21), einen Raumluftheizungswärmetauscher (15), einen Raumluftkühlungswärmetauscher (15), einen Raumluftwärmetauscher (15), einen Außenluftwärmetauscher (15), einen Prozessluftwärmetauscher, einen Radiator (25), eine Fußbodenheizung (9), eine Wandheizung, eine Deckenheizung, einen Handtuchtrockner, und einen sonstigen Wärmetauscher aufweist.
7. Wärmeträgernetz (18) einem der Beispiele 1 bis 6, dadurch gekennzeichnet, dass der wenigstens eine Speicherkreis wenigstens eine Speicherkreismehrheit wenigstens zweier Speicherkreise mit jeweils einem Wärmespeicherelement (1, 5) aufweist, wobei die Steuervorrichtung (14) ausgebildet ist, um die Wärmespeicherelemente (1, 5) auf jeweils unterschiedlicher Temperatur zu halten.
8. Wärmeträgernetz (18) nach Beispiel 7, dadurch gekennzeichnet, dass der wenigstens eine Verbraucherkreis wenigstens eine Verbraucherkreismehrheit wenigstens zweier Verbraucherkreise mit jeweils einem Brauchwasserwärmetauscher (21) aufweist, wobei die Steuervorrichtung (14) ausgebildet ist, um jeden der wenigstens zwei Verbraucherkreise der Verbraucherkreismehrheit mit einem der wenigstens zwei Speicherkreise der Speicherkreismehrheit zu verbinden, wobei die Brauchwasserwärmetauscher (21) mit einer Brauchwasserleitung (16) so verbunden sind, dass deren Strömungsrichtung einer Reihenfolge zunehmender Temperatur der Wärmespeicherelemente (1, 5) der jeweils verbundenen Speicherkreisen entspricht.
9. Wärmeträgernetz (18) nach einem der Beispiele 1 bis 8, dadurch gekennzeichnet, dass der wenigstens eine Speicherkreis einen Kühlspeicherkreis aufweist mit Fließkanälen (10) für das Wärmetauschermedium, die in einer passiven Wärmesenke, insbesondere im Erdboden (11) oder einem Gewässer, angeordnet sind, wobei der wenigstens eine Verbraucherkreis vorzugsweise wenigstens einen Wärmeabführungskreis mit einem Wärmeaufnahmeelement (9) aufweist, der mit einem Ausgangsanschluss des Vorlaufverteilers (23) und einem Eingangsanschluss des Rücklaufsammlers (24) des Kühlspeicherkreises verbunden ist.
10. Wärmeträgernetz (18) nach Beispiel 9, dadurch gekennzeichnet, dass das Wärmeaufnahmeelement aus der Gruppe, welche einen Raumluftheizungswärmetauscher (15), einen Raumluftkühlungswärmetauscher (15), einen Prozessluftwärmetauscher und eine oberhalb eines Wärmespeicherelements wenigstens eines des wenigstens einen Wärmespeicherkreises unmittelbarer Nähe des Wärmespeicherelements angeordnete und von Fließkanälen für Wärmeträgermedium durchzogene Kühlplatte (9) aufweist, ausgewählt ist oder mit einem Heizelement, insbesondere einer Boden-, Wand- oder Deckenheizung zusammenfällt.
11. Wärmeträgernetz (18) nach einem der Beispiele 1 bis 10, dadurch gekennzeichnet, dass das Wärmeträgernetz (18) einen Wärmespeicher nach einem der Ansprüche 1 bis 7 aufweist, wobei der erste Festkörper (1) und der zweite Festkörper (5) Wärmespeicherelemente eines jeweiligen Speicherkreises sind.

### Bezugszeichenliste:

- 1: erster Festkörper (Wärmespeicherelement)
- 2: Außendämmung (Wärmeisolationsschicht)
- 3: erste Fließkanäle
- 4: Zwischendämmung (Wärmeisolationsschicht)
- 5: zweiter Festkörper (Wärmespeicherelement)
- 6: zweite Fließkanäle
- 7: Gebäude
- 8: dritte Fließkanäle
- 9: Kühlplatte / Heizplatte
- 10: Wärmeabgaberegister
- 11: Erdreich (passive Wärmesenke)
- 12: Sonnenkollektoranlage
- 13: Verbrennungsanlage
- 14: Steuervorrichtung
- 15: Lüftungsanlage
- 16: Brauchwasserleitung (Warmwasserzweig)
- 17: Fühler
- 18: Wärmeträgernetz
- 19: Umhüllung
- 20: Steuergerät
- 21: Brauchwasser-Wärmetauscher
- 22: Förderpumpe
- 23: Vorlaufverteiler
- 24: Rücklaufsammler
- 25: Heizkörper
- 26: Ausgleichsbehälter
- 27: Brauchwasser-Mischventil
- 28: Wärmeabgabeelement
- 29: Brauchwasserleitung (Kaltwasserzweig)

## Patentansprüche

1. Verfahren zum Speichern von Wärme, wobei ein Wärmespeicher verwendet wird, der einen ersten Festkörper (1) und einen zweiten Festkörper (5), wobei der zweite Festkörper (5) innerhalb des ersten Festkörpers (1) angeordnet ist, und eine Wärmeisolationsschicht (4) zwischen dem ersten Festkörper (1) und dem zweiten Festkörper (5) aufweist, wobei die Wärmeisolationsschicht (4) den zweiten Festkörper (5) umhüllt und der erste Festkörper (1) und der zweite Festkörper (5) jeweils separat von Fließkanälen (3, 6) für ein Wärmeträgermedium durchzogen sind, wobei der zweite Festkörper (5) auf Temperaturen von über 100°C während einer Aufheizperiode erhitzt wird.

2. Verfahren nach Anspruch 1, **dadurch gekennzeichnet, dass** der zweite Festkörper (5) in der Aufheizperiode auf eine Temperatur von zumindest 110°C bis 120°C erhitzt wird.

3. Verfahren nach Anspruch 1 oder 2, **dadurch gekennzeichnet, dass** als Wärmeträgermedium ein mit Frostschutzmittel versetztes Wärmeträgermedium verwendet wird.

4. Verfahren nach einem der Ansprüche 1 bis 3, **dadurch gekennzeichnet, dass** ein Wärmespeicher verwendet wird, dessen erster Festkörper (1) von einer Wärmeisolationsschicht (2) umhüllt ist.

5. Verfahren nach einem der Ansprüche 1 bis 4, **dadurch gekennzeichnet, dass** ein Wärmespeicher verwendet wird, der in einer dichten Wanne, insbesondere Betonwanne oder aus Ziegel- und/oder Porenbetonsteinen ausgebildeten Wanne, die im Erdreich (11) eingelassen oder angeordnet ist.

6. Verfahren nach einem der Ansprüche 1 bis 5, **dadurch gekennzeichnet, dass** ein Wärmespeicher verwendet wird, der innerhalb eines Gebäudes (7), insbesondere innerhalb eines Kellers, angeordnet ist.

7. Verfahren nach Anspruch 6, **dadurch gekennzeichnet, dass** mit einer Lüftungsanlage (15) und/oder Bodenplatte (9) eine Raumtemperatur innerhalb des Gebäudes (7) reguliert wird, indem überschüssige Wärme über die Bodenplatte (9) und/oder die Lüftungsanlage (15) aufgenommen und in die Festkörper (1, 5) zurückgeführt oder an das Erdreich (11) abgegeben wird.

8. Verfahren nach einem der Ansprüche 1 bis 7, **dadurch gekennzeichnet, dass** ein Wärmespeicher verwendet wird, dessen erster Festkörper (1) und/oder dessen zweite Festkörper (2) eine Schüttung aus stückigem Feststoff aufweist, wobei der stückige Feststoff insbesondere Bauschutt aufweist, wobei der stückige Feststoff vorzugsweise mittels eines Binders gebunden ist, wobei der Binder insbesondere Zement aufweist.

9. Verfahren nach einem der Ansprüche 1 bis 8, **dadurch gekennzeichnet, dass** ein Wärmespeicher verwendet wird, dessen Wärmeisolationsschicht (2, 4) wenigstens teilweise, insbesondere in einem druckbelasteten Bereich, Glasschaum und/oder Ziegelsteine und/oder Porenbetonsteine aufweist.

10. Verfahren nach einem der Ansprüche 1 bis 9, **dadurch gekennzeichnet, dass** ein Wärmespeicher verwendet wird, dessen Wärmeisolationsschicht (2, 4) wenigstens teilweise, insbesondere in einem mechanisch gering belasteten Bereich, Kunststoff, insbesondere einen Porenkunststoff, aufweist.

11. Wärmespeicher aufweisend einen ersten Festkörper (1) und einen zweiten Festkörper (5), wobei der zweite Festkörper (5) innerhalb des ersten Festkörpers (1) angeordnet ist, und eine Wärmeisolationsschicht (4) zwischen dem ersten Festkörper (1) und dem zweiten Festkörper (5), wobei der erste Festkörper (1) und der zweite Festkörper (5) jeweils separat von Fließkanälen (3, 6) für ein Wärmeträgermedium durchzogen sind, und
dass der erste Festkörper (1) von einer Wärmeisolationsschicht (2) umhüllt ist, welche zumindest bereichsweise aus Ziegelsteinen und/oder Porenbetonsteinen ausgebildet ist.

12. Wärmespeicher nach Anspruch 11,
**dadurch gekennzeichnet,**
**dass** der erste Festkörper (1) allseitig von einer Wärmeisolationsschicht (2) umgeben ist.

13. Gebäude, insbesondere mit einem Wärmespeicher nach Anspruch 11 oder 12, und mit einem Wärmespeicher aufweisend einen ersten Festkörper (1) und einen zweiten Festkörper (5), wobei der zweite Festkörper (5) innerhalb des ersten Festkörpers (1) angeordnet ist, und eine Wärmeisolationsschicht (4) zwischen dem ersten Festkörper (1) und dem zweiten Festkörper (5), wobei der erste Festkörper (1) und der zweite Festkörper (5) jeweils separat von Fließkanälen (3, 6) für ein Wärmeträgermedium durchzogen sind, und
mit einer Solarkollektoranlage (12), welche Vakuumröhren aufweist, so dass der zweite Festkörper (5) auf Temperaturen von mehr als 100 °C erhitzt werden kann.

14. Gebäude nach Anspruch 13,
**dadurch gekennzeichnet,**
**dass** das Gebäude eine unmittelbar über dem Wärmespeicher angeordnete Bodenplatte aufweist, welche als Wärmetauscher zum Abführen überschüssiger Wärme entweder nach außen oder zurück in den Wärmespeicher ausgebildet ist.

15. Wärmeträgernetz (18), aufweisend eine Vielzahl von Wärmeträgerkreisen einschließlich wenigstens eines Speicherkreises mit einem Wärmespeicherelement (1, 4, 11), insbesondere Festkörperspeicherelement, wenigstens eines Erzeugerkreises mit einer Wärmequelle (12, 13) und eines Verbraucherkreises mit einem Wärmeverbraucher (9, 15, 21, 25), und eine Steuervorrichtung (14), welche ausgebildet ist, um die Wärmeträgerkreise wahlweise miteinander zu verbinden.
